# EUROPÄISCHE PATENTSCHRIFT

(11) **EP 3 628 571 B1**
(45) Veröffentlichungstag und Bekanntmachung des Hinweises auf die Patenterteilung: **16.11.2022**
(21) Anmeldenummer: 19194350.5
(22) Anmeldetag: 29.08.2019
(51) Int. Cl.: B62D 21/20, B60K 1/04, B62D 33/04, B60S 9/08

(54) **NUTZFAHRZEUG MIT AN DER BODENSTRUKTUR VORGESEHENEM BATTERIEKASTEN**
COMMERCIAL VEHICLE WITH A BATTERY BOX ON THE GROUND STRUCTURE
VÉHICULE UTILITAIRE POURVU DE BOÎTIER DE BATTERIE SITUÉ SUR LA STRUCTURE AU SOL

(30) Priorität: 31.08.2018 DE 102018121313
(43) Veröffentlichungstag der Anmeldung: 01.04.2020
(73) Patentinhaber: Schmitz Cargobull AG, 48341 Altenberge (DE)
(72) Erfinder: Dechering, Markus, 48691 Vreden (DE); Holling, Maik, 48485 Neuenkirchen (DE); te Poele, Stephan, 48691 Vreden (DE)
(74) Vertreter: Cohausz & Florack

(56) Entgegenhaltungen:
- EP-A1- 2 712 748
- CN-U- 205 706 877
- DE-A1-102016 208 878
- US-A- 5 585 205

## Beschreibung

Die Erfindung betrifft ein Nutzfahrzeug, insbesondere Lastkraftwagen, Anhänger oder Sattelauflieger, mit einer einen Ladeboden tragenden Bodenstruktur, wobei an der Bodenstruktur den zwei gegenüberliegenden Längsseiten des Nutzfahrzeugs zugeordnete und sich jeweils wenigstens abschnittsweise nach unten erstreckende Bauelemente fest aufgehängt sind.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern. Das Dach von Planenaufbauten weist typischerweise seitlich angeordnete Holmstrukturen in Form von Längsholmen auf, die unter Bildung einer Rahmenstruktur quer zum Nutzfahrzeug über Spriegel miteinander verbunden sind. Die Rahmenstruktur trägt dann die das Dach verschließende Planeneinheit, wobei die Rahmenstruktur durch Rungen getragen wird, die sich wenigstens an den Ecken bzw. vertikalen Kanten des Nutzfahrzeugs befinden.

Neben den Planenaufbauten sind aber auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden entsprechende Paneelstrukturelemente auf, die als zweischaliges Paneel ausgebildet sein können. Die Paneele umfassen dabei eine äußere und eine innere, strukturgebende Decklage sowie eine dazwischen vorgesehene Kernlage, die typischerweise aus einem geschäumten Kunststoff gebildet wird. Dabei können die innere und/oder die äußere Decklage selbst bedarfsweise mehrlagig aufgebaut sein, wobei die strukturgebende Lage insbesondere wenigstens im Wesentlichen aus einem glasfaserverstärkten Kunststoff, Stahl oder Aluminium besteht. Die innere und/oder die äußere Decklage kann zudem lackiert sein.

Da die Kernlage aus geschäumtem Kunststoff, regelmäßig handelt es sich um geschäumtes Polyurethan, thermisch in hohem Maße isolierend wirkt, bieten sich Kofferaufbauten bei hinreichender Materialstärke der Kernlage zur Bildung von sogenannten Kühlkofferaufbauten an, die zum Transport von Gütern in einem temperierten, insbesondere gekühlten, Laderaum vorgesehen sind. Um den Laderaum des Kühlkofferaufbaus zu temperieren, insbesondere zu kühlen, wird regelmäßig an der Vorderseite der Stirnwand des Aufbaus eine sogenannte Transportkältemaschine montiert, die mit dem Laderaum in Verbindung steht. Die Transportkältemaschinen weisen typischerweise einen Verbrennungsmotor auf, der einen Kompressor der Transportkältemaschine antreibt. Der Kompressor kann aber auch von einem Elektromotor angetrieben werden.

Zur Beleuchtung des Laderaums von Kofferaufbauten können in bzw. an den Wänden und/oder dem Dach elektrische Verbraucher in Form von Leuchten verbaut sein. Bei Kofferaufbauten und Planenaufbauten sind Leuchten typischerweise auch als sogenannte Seiten- bzw. Konturmarkierungsleuchten vorgesehen, welche die Sichtbarkeit des Nutzfahrzeugs in der Dunkelheit verbessern. Grundsätzlich kommen noch weitere Verbraucher von Nutzfahrzeugen, bedarfsweise auch zum Antrieb der Nutzfahrzeuge selbst, in Frage, die mit elektrischer Spannung versorgt werden müssen.

Die elektrische Energie zur Spannungsversorgung der elektrischen Verbraucher der Nutzfahrzeuge wird grundsätzlich aus einer Batterie entnommen, die nach Art und Anzahl der zu versorgenden Verbraucher eine nicht unerhebliche Größe aufweisen kann, so dass Bedarf an einer geeigneten Montage solcher Batterien besteht, und zwar insbesondere dann, wenn die bestehenden Batterien nicht ohne Weiteres durch größere Batterien ersetzt werden können. Ein gattungsgemäßes Nutzfahrzeug ist beispielsweise aus der US 5 585 205 A bekannt.

Der vorliegenden Erfindung liegt daher die Aufgabe zugrunde, das Nutzfahrzeug der eingangs genannten und zuvor näher beschriebenen Art derart auszugestalten und weiterzubilden, dass auch verhältnismäßig große Batterien zweckmäßig, sicher und zuverlässig montiert werden können.

Diese Aufgabe ist durch ein Nutzfahrzeug nach Anspruch 1 gelöst.

Da zwischen den sich wenigstens abschnittsweise nach unten erstreckenden Bauelementen wenigstens ein Batteriekasten zur Aufnahme wenigstens einer elektrischen Batterie vorgesehen ist, können auch große Batteriekästen verbaut werden, da über die Breite des Nutzfahrzeugs hinreichend viel Platz vorhanden ist. Des Weiteren ist der Batteriekasten durch die äußeren wenigstens zwei sich wenigstens abschnittsweise nach unten erstreckenden Bauelemente vor Beschädigung gut geschützt, was die Sicherheit und Zuverlässigkeit des Batteriekastens erhöht. Zudem können die äußeren wenigstens zwei sich wenigstens abschnittsweise nach unten erstreckenden Bauelemente für die Montage des Batteriekastens genutzt werden, um diesen leicht montieren und leicht wieder demontieren zu können, etwa zum Zwecke der Wartung oder des Austauschs von Batterien bzw. Batteriezellen. Dabei ist es grundsätzlich nicht zwingend erforderlich, dass der wenigstens eine Batteriekasten vollständig zwischen den wenigstens zwei sich wenigstens abschnittsweise nach unten erstreckenden Bauelementen aufgenommen ist, und zwar weder in Längsrichtung des Nutzfahrzeugs, noch in Querrichtung des Nutzfahrzeugs oder in einer Richtung senkrecht zur Bodenstruktur. Der wenigstens eine Batteriekasten sollte jedoch in wenigstens einer dieser drei Richtungen wenigstens teilweise zwischen den wenigstens zwei sich wenigstens abschnittsweise nach unten erstreckenden Bauelementen angeordnet sein.

Als Batterien kommen grundsätzlich alle gängigen Arten von Batterien in Frage. Es sind reine Batterien ebenso wie wieder aufladbare Batterien, also sogenannte Akkumulatoren, beispielsweise Bleiakkumulatoren oder Lithium-Ion-Akkumulatoren, denkbar. Zum Schutz der Batterien dient der Batteriekasten, aus dem die Batterien vorzugsweise entnommen werden können. Bedarfsweise kann aber auch eine integrale Ausgestaltung von Batteriekasten und Batterie vorgesehen sein, bei der die Batterie nicht, jedenfalls nicht ohne Weiteres, von dem Batteriekasten getrennt werden kann. Mitunter kann ein Trennen der Batterie vom Batteriekasten nicht zerstörungsfrei in Bezug auf die Batterie und/oder den Batteriekasten erfolgen.

Bei einer ersten besonders bevorzugten Ausgestaltung des Nutzfahrzeugs ist der Batteriekasten mit den sich wenigstens abschnittsweise nach unten erstreckenden Bauelementen fest verbunden. So kann der Batteriekasten fest und zuverlässig gehalten werden. Unabhängig davon kann die Verbindung des Batteriekastens mit den entsprechenden Bauelementen auch zu einer Aussteifung dieser Bauelemente und/oder des Batteriekastens führen, was einen willkommenen Zusatznutzen darstellen kann. Ebenso ist so eine einfache Montage des Batteriekastens möglich. Besonders bevorzugt ist es dabei, wenn der Batteriekasten an den sich wenigstens abschnittsweise nach unten erstreckenden Bauelementen aufgehängt ist. Eine gegebenenfalls aufwendige und umständliche direkte, insbesondere ausschließliche, Verbindung des Batteriekastens mit der Unterseite der Bodenstruktur wird somit entbehrlich.

Die sich wenigstens abschnittsweise nach unten erstreckenden Bauelemente können bevorzugt durch Profile, insbesondere aus Blech, gebildet sein. Dies führt bei geringem Gewicht zu einer hinreichend stabilen Struktur. Alternativ oder zusätzlich können die wenigstens zwei sich wenigstens abschnittsweise nach unten erstreckenden Bauelemente über wenigstens eine Verstrebung miteinander verbunden sein, um die Struktur zu versteifen und eine zuverlässige und sichere Montage des Batteriekastens zu erreichen. Dies gilt umso mehr, wenn wenigstens zwei Verstrebungen als gekreuzte Verstrebungen ausgebildet sind.

Im Falle von Verstrebungen kann es zu einer weiteren Aussteifung der Struktur und einer sicheren Montage des Batteriekastens beitragen, wenn der wenigstens eine Batteriekasten mit der wenigstens einen Verstrebung verbunden ist. Um die Montage und/oder Demontage zu vereinfachen, kann der wenigstens eine Batteriekasten zudem an der wenigstens einen Verstrebung aufgehängt sein und/oder auf der wenigstens einen Verstrebung abgestützt sein. Letzteres bedeutet insbesondere, dass der Batteriekasten durch die wenigstens eine Verstrebung wenigstens teilweise unterfangen wird. Eine gegebenenfalls aufwendige und umständliche direkte, insbesondere ausschließliche, Verbindung des Batteriekastens mit der Unterseite der Bodenstruktur wird somit entbehrlich.

Wenn der wenigstens eine Batteriekasten lösbar mit der Bodenstruktur, vorzugsweise mit den sich wenigstens abschnittsweise nach unten erstreckenden Bauelementen, insbesondere mit der wenigstens einen Verstrebung, verbunden ist, kann die Batterie sehr einfach gewartet oder ausgetauscht werden. Dies ist in besonderem Maße von Bedeutung, wenn die Batterie als Akkumulator ausgebildet ist, der für das Laden im ausgebauten Zustand, etwa in einer entsprechenden, externen Ladestation, vorgesehen ist.

Die sich wenigstens abschnittsweise nach unten erstreckenden Bauelemente sind erfindungsgemäß als Bauelemente einer Stützwerkstruktur ausgebildet, um mögliche Synergien durch die Verwendung der Stützwerkstruktur zu nutzen. Dabei ist es besonders einfach und zweckmäßig, wenn die sich wenigstens abschnittsweise nach unten erstreckenden Bauelemente durch entsprechende Seitenteile einer Stützwerkstruktur gebildet werden. Dies sorgt beispielsweise für einen Schutz des Batteriekastens vor Beschädigung von außen. Alternativ oder zusätzlich lässt sich ein Mehrfachnutzen hinsichtlich der mechanischen Eigenschaften dadurch erreichen, dass die wenigstens eine Verstrebung eine Querverstrebung und/oder eine Verstrebung der Stützwerkstruktur ist.

Um das Nutzfahrzeug über die Stützwerkstruktur auf dem Boden abstützen zu können, ohne dass die Stützwerkstruktur das Verfahren des Nutzfahrzeugs beeinträchtigt, kann die Stützwerkstruktur von einer Nichtgebrauchsstellung in eine Gebrauchsstellung verstellt werden. In der Gebrauchsstellung kann dann die Stützwerkstruktur gegenüber der Nichtgebrauchsstellung nach unten ausgefahren sein, um das Nutzfahrzeug, insbesondere mit dem unteren Ende der Stützwerkstruktur, auf dem Boden bzw. Untergrund abzustützen. Hierfür können weiter bevorzugt an dem unteren Ende der Stützwerkstruktur wenigstens zwei entsprechende Füße vorgesehen sein, um das Nutzfahrzeug sicher zu stützen. Die Verwendung einer Stützwerkstruktur bietet sich insbesondere bei Sattelaufliegern an, da diese regelmäßig auch ohne Zugfahrzeug sicher abgestellt werden sollen.

Um die Stützstruktur aus der Nichtgebrauchsstellung einfach und zuverlässig nach unten ausfahren und wieder in der Nichtgebrauchsstellung einfahren zu können, bietet es sich an, wenn die Stützwerkstruktur zwei gegenüberliegenden Längsseiten des Nutzfahrzeugs zugeordnete Stützwinden aufweist, die zum Verstellen der Stützwerkstruktur in die Gebrauchsstellung nach unten ausfahrbar und zum Verstellen in die Nichtgebrauchsstellung nach oben einfahrbar sind. Die Stützwinden können für einen sicheren Stand zudem Füße zum Abstützen des Nutzfahrzeugs auf dem Untergrund tragen.

Zur Aussteifung der Stützwerkstruktur und zum Schutz des Batteriekastens kann die wenigstens eine Verstrebung mit den gegenüberliegenden Stützwinden verbunden sein, um diese gegeneinander zu verstreben. Mithin handelt es sich bei der wenigstens einen Verstrebung insbesondere um eine Querverstrebung. Für eine einfache und zuverlässige Montage kann die wenigstens eine Verstrebung zudem an den gegenüberliegenden Stützwinden aufgehängt sein. Eine gegebenenfalls aufwendige und umständliche direkte, insbesondere ausschließliche, Verbindung der wenigstens einen Verstrebung mit der Unterseite der Bodenstruktur wird somit bedarfsweise entbehrlich.

Um unerwünschte Kollisionen der sich wenigstens abschnittsweise nach unten erstreckenden Bauelemente mit Hindernissen zu vermeiden und so gleichzeitig eine Beschädigung des wenigstens einen Batteriekastens gegenüber Beschädigungen zu verhindern, können die sich wenigstens abschnittsweise nach unten erstreckenden Bauelemente gegenüber den jeweils zugeordneten Längsseiten des Nutzfahrzeugs nach innen versetzt angeordnet sein. Anders ausgedrückt können die wenigstens zwei sich wenigstens abschnittsweise nach unten erstreckenden Bauelemente in der Längsrichtung des Nutzfahrzeugs nach innen eingerückt sein, so dass sich ein wenigstens im Wesentlichen horizontaler Abstand zwischen den seitlichen Rändern der Bodenstruktur und den sich wenigstens abschnittsweise nach unten erstreckenden, den Rändern zugeordneten Bauelementen ergibt. Dies gilt vorzugsweise jedenfalls dann, wenn das Nutzfahrzeug auf einem wenigstens im Wesentlichen horizontalen Untergrund steht.

Alternativ oder zusätzlich können die sich wenigstens abschnittsweise nach unten erstreckenden Bauelemente weiter in einer Richtung parallel und/oder senkrecht zur Längserstreckung des Nutzfahrzeugs erstrecken als sich der wenigstens eine Batteriekasten in dieser Richtung erstreckt. Dies kann den Batteriekasten vor äußeren Beschädigungen schützen. Dies gilt insbesondere dann, wenn eine Projektion des wenigstens einen Batteriekastens senkrecht auf eine Ebene längs zum Nutzfahrzeug und wenigstens senkrecht zur Bodenstruktur wenigstens im Wesentlichen in einer Projektion der sich wenigstens abschnittsweise nach unten erstreckenden Bauelemente senkrecht auf dieselbe Ebene aufgenommen ist. Anders ausgedrückt kann die Kontur der entsprechenden Projektion des Batteriekastens innerhalb der Kontur der sich wenigstens abschnittsweise nach unten erstreckenden Bauelemente verlaufen. Die Fläche der Projektion der sich wenigstens abschnittsweise nach unten erstreckenden Bauelemente kann also größer sein als die Fläche der Projektion des Batteriekastens, wobei die Fläche der Projektion des Batteriekastens nicht über die Fläche der Projektion der sich wenigstens abschnittsweise nach unten erstreckenden Bauelemente nach außen übersteht, etwa wenn die entsprechenden Projektionen vollflächig sind, also keine Löcher aufweisen.

Für einen einfachen Service und ein einfaches Austauschen der wenigstens einen Batterie des Nutzfahrzeugs bietet es sich an, wenn der wenigstens eine Batteriekasten einen Deckel aufweist. Das Öffnen des Deckels ermöglicht dann den Zugriff auf die wenigstens eine im Batteriekasten aufgenommene Batterie. Dabei kann der Deckel der Einfachheit halber lösbar und/oder schwenkbar an einem Gehäuseabschnitt des Batteriekastens montiert sein. Unabhängig davon bietet es sich zum Schutz der wenigstens einen Batterie an, wenn der wenigstens eine Batteriekasten aus Kunststoff gebildet ist.

Um die sich wenigstens abschnittsweise nach unten erstreckenden Bauelemente zuverlässig an die Bodenstruktur anbinden zu können und um dabei hohe Kräfte an die Bodenstruktur ableiten zu können, können die sich wenigstens abschnittsweise nach unten erstreckenden Bauelemente mit wenigstens einem Trägerbalken verbunden sein. Die Verbindung kann einfach und dauerhaft bereitgestellt werden, wenn diese durch wenigstens eine Verschraubung bildet wird. Um eine zuverlässige Verbindung zu schaffen, können die sich wenigstens abschnittsweise nach unten erstreckenden Bauelemente mit wenigstens einer Verstärkung des Trägerbalkens verbunden sein. Diese wenigstens eine Verstärkung kann bevorzugt als metallene Verstärkung ausgebildet sein und/oder je nach den entsprechenden Anforderungen ganz oder teilweise in wenigstens einer Aussparung im wenigstens einen Trägerbalken angeordnet sein. Bedarfsweise kann die wenigstens eine Verstärkung bündig mit der Oberseite und/oder der Unterseite des Trägerbalkens ausgebildet sein. Dabei ist es besonders zweckmäßig, wenn die Verstärkung U-förmig ausgebildet ist und den Trägerbalken von unten unterfängt. Die wenigstens eine Verstärkung kann aber beispielsweise auch seitlich in eine Aussparung im Kernbereich des Trägerbalkens eingeschoben sein. Unabhängig davon ist es grundsätzlich in Bezug auf die Stabilität der Bodenstruktur bevorzugt, wenn sich der wenigstens eine Trägerbalken quer zum Nutzfahrzeug erstreckt, mithin als Querbalken ausgebildet ist, und/oder wenn es sich bei dem Trägerbalken um einen Trägerbalken wenigstens im Wesentlichen aus Holz handelt.

Die vorbeschriebenen Vorteile kommen insbesondere dann zum Tragen, wenn eine Transportkältemaschine zur Kühlung eines Laderaums eines Aufbaus, vorzugsweise Kofferaufbaus, vorgesehen ist und die wenigstens eine Batterie des wenigstens einen Batteriekastens zum elektrischen Antrieb der Transportkältemaschine mit der Transportkältemaschine elektrisch verbunden ist. So kann auf einen Verbrennungsmotor zum Antrieb der Transportkältemaschine wenigstens zeitweise verzichtet werden, ohne dass eine versehentliche Unterbrechung der Kühlung der Ladung im Laderaum des Nutzfahrzeugs zu befürchten ist. Die Kapazität und Leistung der wenigstens einen Batterie kann bei entsprechender Ausgestaltung und Anordnung des wenigstens einen Batteriekastens bei geringem Aufwand so gewählt werden, dass in allen Betriebszuständen des Nutzfahrzeugs und während der gesamten Zeit, in der sich temperaturempfindliche Ladung im Laderaum befindet, sichergestellt werden kann, dass die Ladung in der gewünschten Weise temperiert, insbesondere gekühlt wird. Dies erfordert grundsätzlich verhältnismäßig leistungsstarke Batterien, die regelmäßig recht groß und schwer sind.

Nachfolgend wird die Erfindung anhand einer lediglich ein Ausführungsbeispiel darstellenden Zeichnung näher beschrieben. In der Zeichnung zeigt
- Fig. 1: ein erfindungsgemäßes Nutzfahrzeug mit einem Kühlkofferaufbau in einer perspektivischen Ansicht,
- Fig. 2: einen Abschnitt der Bodenstruktur mit der Stützwerkstruktur in einer perspektivischen Ansicht von vorne und
- Fig. 3: den Abschnitt der Bodenstruktur mit der Stützwerkstruktur der Fig. 2 in einer perspektivischen Ansicht von hinten.

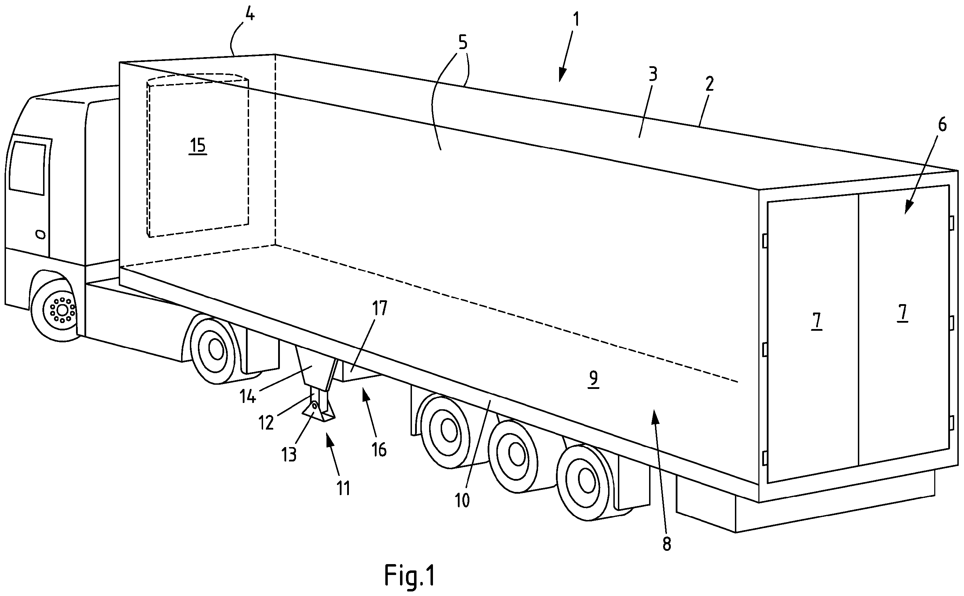

In der Fig. 1 ist ein Nutzfahrzeug 1 mit einem Aufbau 2 in Form eines Kühlkofferaufbaus in einer perspektivischen Ansicht dargestellt, das von einer Zugmaschine Z gezogen wird. Der Aufbau 2 umfasst ein festes Dach 3, eine feste Stirnwand 4, zwei feste Seitenwände 5 und eine feste Rückwand 6, die im Wesentlichen durch zwei Flügeltüren 7 gebildet wird. Zudem umfasst der Aufbau einen Laderaum 8, der nach unten durch einen Ladeboden 9 begrenzt wird, der dem Aufstellen von Ladung dient. Die Seitenwände 5, die Stirnwand 4, die Flügeltüren 7 der Rückwand 6 und das Dach 3 werden wenigstens im Wesentlichen aus Paneelen umfassend innere und äußere Deckschichten sowie eine innere Kernschicht aus einem geschäumten Kunststoff gebildet. Der Ladeboden 9 wird durch eine Bodenstruktur 10 gebildet und/oder getragen, an deren Unterseite eine Stützwerkstruktur 11 vorgesehen ist. Die Stützwerkstruktur 11 weist den gegenüberliegenden Seitenwänden 5 des Aufbaus 2 bzw. Längsseiten des Nutzfahrzeugs 1 zugeordnet jeweils eine Stützwinde 12 auf, die aus der dargestellten Nichtgebrauchsstellung der Stützwerkstruktur 11 nach unten in eine Gebrauchsstellung der Stützwerkstruktur 11 ausgefahren werden kann, so dass die Füße 13 der Stützwerkstruktur auf dem Untergrund aufgestellt werden können. In der Gebrauchsstellung kann das Nutzfahrzeug 1 daher auf den Stützwinden 12 bzw. der Stützwerkstruktur 11 also auf dem Untergrund abgestellt werden, auch wenn das Nutzfahrzeug 1 nicht mit einem Zugfahrzeug Z verbunden ist. Seitlich an den Außenseiten der Stützwinden 11 ist jeweils ein sich wenigstens abschnittsweise nach unten erstreckendes Bauelement 14 vorgesehen, das jeweils ein Seitenteil der Stützwerkstruktur 11 darstellt und der Montage der Stützwinden 12 und der Stützwerkstruktur 11 an der Bodenstruktur 8 dient sowie eine Aussteifung der Stützwerkstruktur 11 bewirkt.

An der Vorderseite der Stirnwand 4 ist eine Transportkältemaschine 15 vorgesehen, die so mit dem Laderaum 8 des Aufbaus 2 verbunden ist, dass die Luft innerhalb des Aufbaus 2 gekühlt wird. Hierzu saugt die Transportkältemaschine 15 Luft aus dem Laderaum 8 an, kühlt die Luft in der Transportkältemaschine 15 und bläst die gekühlte Luft wieder in den Laderaum 8 hinein. In der Transportkältemaschine 15 wird zur Kühlung der Luft ein Kältemittel über eine Drossel geleitet und dabei verdampft. In einem sich anschließenden Wärmetauscher nimmt das Kältemittel Wärme von der zu kühlenden Luft auf. Das verdampfte Kältemittel wird dann über einen Kompressor der Transportkältemaschine 15 verdichtet. Anschließend gibt das komprimierte Kältemittel einen Teil seiner Wärme über einen Wärmetauscher an die Umgebung ab. Zum erneuten Verdampfen des im Kreislauf geführten Kältemittels wird das Kältemittel wieder über die Drossel geleitet. Der entsprechende thermodynamische Kreisprozess der Transportkältemaschine 15 ist grundsätzlich bekannt und findet typischerweise bei Kühlschränken Verwendung, so dass dieser thermodynamische Kreisprozess vorliegend keiner weiteren Erläuterung bedarf. Der Kompressor der Transportkältemaschine 15 weist einen elektromotorischen Antrieb auf, der von Batterien 16, insbesondere Akkumulatoren, mit Spannung versorgt wird, welche in einem Batteriekasten 17 unterhalb der Bodenstruktur 10 aufgenommen sind. Der Batteriekasten 17 ist dabei zwischen den zwei sich wenigstens abschnittsweise nach unten erstreckenden Bauelementen 14 der Stützwerkstruktur 11 angeordnet.

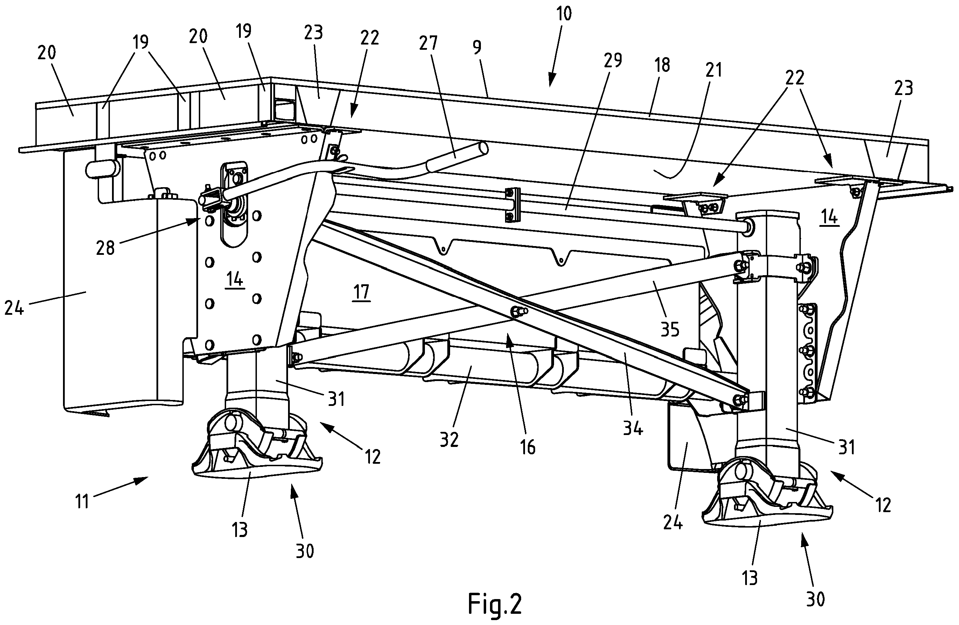

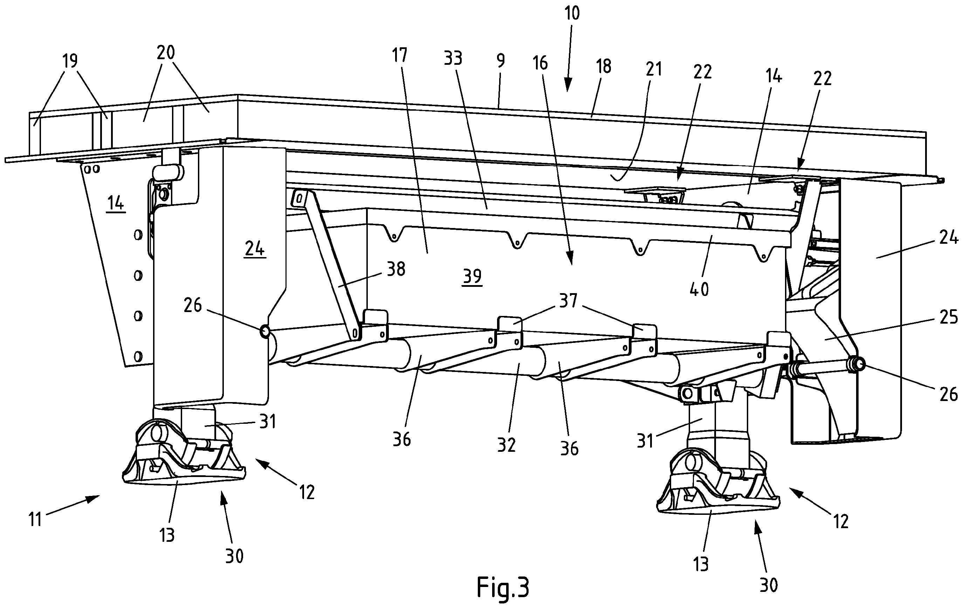

In den Fig. 2 und 3 ist die Stützwerkstruktur 11, der Batteriekasten 17 und abschnittsweise die Bodenstruktur 10 im Detail dargestellt. Die Stützwerkstruktur 11 befindet sich dabei in einer Nichtgebrauchsstellung, in der die Stützwerkstruktur 11 das Verfahren des Nutzfahrzeugs 1 nicht beeinträchtigt. Die Bodenstruktur 10 umfasst dabei eine obere Deckschicht 18, welche den Ladeboden 9 bildet, unter der voneinander beabstandete, sich jeweils quer zum Nutzfahrzeug erstreckende Trägerbalken 19 vorgesehen sind. Die Zwischenräume zwischen den Trägerbalken 19 sind zum Zwecke der Isolation mit einem geschäumten Kunststoff 20 gefüllt. Nach unten wird die Bodenstruktur 10 durch eine untere Deckschicht 21 unterhalb der Trägerbalken 19 abgeschlossen.

Die Stützwerkstruktur 11 ist über die beiden sich wenigstens abschnittweise nach unten erstreckenden Bauelemente 14 fest mit der Bodenstruktur 10 verbunden, und zwar über Schraubverbindungen 22. Die sich wenigstens abschnittweise nach unten erstreckenden Bauelemente 14 sind dabei mit, insbesondere metallenen, Verstärkungen 23 der Trägerbalken 19 verschraubt. Die Verstärkungen 23 sind dabei U-förmig, die Trägerbalken 19 unterfangend sowie wenigstens mit dem bodenseitigen Quersteg teilweise in einer Aussparung des Trägerbalkens 19 aufgenommen ausgebildet. Mit anderen Worten sind die beiden sich wenigstens abschnittweise nach unten erstreckenden Bauelemente 14 an der Bodenstruktur 10 aufgehängt. Zudem tragen die Bauelemente 14 Abweiser 24, etwa aus Kunststoff, die als Teil des Unterfahrschutzes fungieren und in denen ein Radkeil 25 aufgenommen werden kann. Zum Einsetzen und Herausnehmen des Radkeils 25 können die Abweiser 24 um eine Drehachse 26 nach außen geschwenkt werden.

Die beiden sich wenigstens abschnittweise nach unten erstreckenden Bauelemente 14 tragen zudem jeweils eine Stützwinde 12, die über einen Handhebel 27, einen Handantrieb 28 und eine, die beiden Stützwinden 12 verbindende Antriebswelle 29 nach unten ausgefahren bzw. nach oben eingefahren werden können. Dazu wird ein verstellbares Stützwindenbein 30 der Stützwinden 12 aus einen ortsfesten Stützwindengehäuse 31 ausgefahren bzw. eingefahren. An den unteren Enden der Stützwindenbeine 30 ist jeweils ein Fuß 13 vorgesehen. Die Stützwinden 12 und die sind sich wenigstens abschnittweise nach unten erstreckenden Bauelemente 14 sind zudem jeweils durch Verstrebungen 32-35 quer zum Nutzfahrzeug 1 verbunden. Diese Verstrebungen 32-35 sind teilweise gegeneinander gekreuzt. Die nicht gekreuzten Verstrebungen 32,33 erstrecken sich im Gegensatz zu den gekreuzten Verstrebungen 34,35 wenigstens im Wesentlichen parallel zur Bodenstruktur 10 bzw. dem Ladeboden 9.

Eine Verstrebung 32 greift dabei mit Haltestreben 36 unter den Batteriekasten 17. Anstelle der Haltestreben 32 könnte auch wenigstens ein anderes Halteelement vorgesehen sein, das den Batteriekasten 17 untergreift, so dass sich der Batteriekasten 17 auf der Verstrebung 32, den Haltestreben 36 bzw. dem wenigstens einen Halteelement abstützt. Die dargestellten Haltestreben 36 weisen hakenförmige Enden 37 auf, um die Batteriekasten 17 formschlüssig in einer Richtung parallel zur Längserstreckung des Nutzfahrzeugs 1, vorliegend nach hinten, zu halten. In der Richtung parallel zur Längserstreckung des Nutzfahrzeugs 1 nach vorne ist der Batteriekasten 17 ebenfalls durch die Verstrebungen 34,35 formschlüssig gehalten. Wenigstens ein entsprechendes Formschlusselement kann aber auch an dem wenigstens einen anderen Halteelement vorgesehen sein. Der Batteriekasten 17 kann alternativ oder zusätzlich aber auch auf andere Weise mit den wenigstens einer Verstrebung 32-35 verbunden sein. Hier kommen beispielsweise kraftschlüssige Verbindungen, insbesondere Verschraubungen, in Frage. Die untere Verstrebung 32 ist zudem über eine Stützstrebe 38 mit eine oberen Verstrebung 33 verbunden, um ein Kippen der unteren Verstrebung 32 zu vermeiden. Vor dem Batteriekasten 17 sind ferner zwei gekreuzte Verstrebungen 34,35 vorgesehen.

Der Batteriekasten 17 weist ein unteres Gehäuse 39 zum Aufnahmen der wenigstens einen Batterie und einen Deckel 40 auf, der eine obere Öffnung des Batteriekastens 17 verschließt. Der Deckel 40 ist bei dem dargestellten und insoweit bevorzugten Batteriekasten 17 von dem Gehäuse 39 des Batteriekastens 17 abnehmbar ausgebildet. Alternativ oder zusätzlich könnte der Deckel 40 des Batteriekastens 17 aber auch gegenüber dem Gehäuse 39 des Batteriekastens 17 schwenkbar angeordnet sein, um bedarfsweise Zugang zu der wenigstens einen im Batteriekasten 17 aufgenommenen Batterie zu gewähren. Die wenigstens eine Batterie ist bei dem dargestellten und insoweit bevorzugten Batteriekasten 17 als Akkumulator ausgebildet und elektrisch mit der Transportkältemaschine 15 verbunden.

Bei dem dargestellten und insoweit bevorzugten Nutzfahrzeug 1 verdecken die zwei sich wenigstens abschnittsweise nach unten erstreckenden Bauelemente 14, bei denen es sich um Seitenteile der Stützwerkstruktur 11 handelt, von außen gesehen den Batteriekasten 17 wenigstens zu einem Großteil. Der dargestellte Batteriekasten 17 ragt lediglich etwas nach hinten gegenüber den Seitenteilen des Stützwerks 11 bzw. den sich wenigstens abschnittsweise nach unten erstreckenden Bauelementen 14 vor, wenn die Blickrichtung senkrecht zur Seitenwand 5 verläuft. Der Batteriekasten 17 könnte alternativ oder zusätzlich in einer anderen Richtung gegenüber den zwei sich wenigstens abschnittsweise nach unten erstreckenden Bauelementen 14 vorstehen. Es kann aber zum besseren Schutz des Batteriekastens 17 auch vorgesehen sein, dass eine Projektion des Batteriekastens 17 auf eine Ebene parallel zu den Seitenwänden 5 vollständig innerhalb einer Projektion der Seitenteile der Stützwerkstruktur 11 bzw. der zwei sich wenigstens abschnittsweise nach unten erstreckenden Bauelemente 14 auf dieselbe Ebene angeordnet sind. Mit anderen Worten umschließt die äußere Kontur der Projektion der zwei sich wenigstens abschnittsweise nach unten erstreckenden Bauelemente 14 dann die äußere Kontur des Batteriekastens 17 jeweils bezogen auf die zuvor genannte Ebene.

### Bezugszeichenliste

- 1: Nutzfahrzeug
- 2: Aufbau
- 3: Dach
- 4: Stirnwand
- 5: Seitenwand
- 6: Rückwand
- 7: Flügeltür
- 8: Laderaum
- 9: Ladeboden
- 10: Bodenstruktur
- 11: Stützwerkstruktur
- 12: Stützwinde
- 13: Fuß
- 14: Bauelement
- 15: Transportkältemaschine
- 16: Batterie
- 17: Batteriekasten
- 18: obere Deckschicht
- 19: Trägerbalken
- 20: Kunststoff
- 21: untere Deckschicht
- 22: Schraubverbindung
- 23: Verstärkung
- 24: Abweiser
- 25: Radkeil
- 26: Drehachse
- 27: Handhebel
- 28: Handantrieb
- 29: Antriebswelle
- 30: Stützwindenbein
- 31: Stützwindengehäuse
- 32,33: Verstrebungen
- 34,35: gekreuzte Verstrebungen
- 36: Haltestreben
- 37: hakenförmige Enden
- 38: Stützstrebe
- 39: Gehäuse
- 40: Deckel
- Z: Zugmaschine

## Patentansprüche

1. Nutzfahrzeug (1), insbesondere Lastkraftwagen, Anhänger oder Sattelauflieger, mit einer einen Ladeboden (9) tragenden Bodenstruktur (10), wobei an der Bodenstruktur (10) den zwei gegenüberliegenden Längsseiten des Nutzfahrzeugs (1) zugeordnete und sich jeweils wenigstens abschnittsweise nach unten erstreckende Bauelemente (14) fest aufgehängt sind,
wobei zwischen den sich wenigstens abschnittsweise nach unten erstreckenden Bauelementen (14) wenigstens ein Batteriekasten (17) zur Aufnahme wenigstens einer elektrischen Batterie (16) vorgesehen ist,
**dadurch gekennzeichnet, dass**
die sich wenigstens abschnittsweise nach unten erstreckenden Bauelemente (14) als Bauelemente einer von einer Nichtgebrauchsstellung in eine Gebrauchsstellung verstellbaren Stützwerkstruktur (11) zum Abstützen des Nutzfahrzeugs (1) auf dem Untergrund ausgebildet sind.

2. Nutzfahrzeug nach Anspruch 1,
**dadurch gekennzeichnet, dass**
der Batteriekasten (17) mit den sich wenigstens abschnittsweise nach unten erstreckenden Bauelementen (14) fest verbunden ist und dass, vorzugsweise, der Batteriekasten (17) an den sich wenigstens abschnittsweise nach unten erstreckenden Bauelementen (14) aufgehängt ist.

3. Nutzfahrzeug nach Anspruch 1 oder 2,
**dadurch gekennzeichnet, dass**
die sich wenigstens abschnittsweise nach unten erstreckenden Bauelemente (14) durch Profile, insbesondere aus Blech, gebildet sind und/oder dass die sich wenigstens abschnittsweise nach unten erstreckenden Bauelemente (14) über wenigstens eine Verstrebung (32-35), insbesondere gekreuzte Verstrebungen (34,35), miteinander verbunden sind.

4. Nutzfahrzeug nach Anspruch 3,
**dadurch gekennzeichnet, dass**
der wenigstens eine Batteriekasten (17) mit der wenigstens einen Verstrebung (32-35) verbunden ist und dass, vorzugsweise, der wenigstens eine Batteriekasten (17) an der wenigstens einen Verstrebung (32,-35) aufgehängt und/oder auf der wenigstens einen Verstrebung (32-35) abgestützt ist.

5. Nutzfahrzeug nach einem der Ansprüche 1 bis 4,
**dadurch gekennzeichnet, dass**
der wenigstens eine Batteriekasten (17) lösbar mit der Bodenstruktur (10), vorzugsweise mit den sich wenigstens abschnittsweise nach unten erstreckenden Bauelementen (14), insbesondere mit der wenigstens einen Verstrebung (32-35), verbunden ist.

6. Nutzfahrzeug nach einem der Ansprüche 1 bis 5,
**dadurch gekennzeichnet, dass**
die sich wenigstens abschnittsweise nach unten erstreckenden Bauelemente (14) als Seitenteile der Stützwerkstruktur (11) ausgebildet sind und dass, vorzugsweise, die wenigstens eine Verstrebung (32-35) eine Querverstrebung und/oder eine Verstrebung der Stützwerkstruktur (11) ist.

7. Nutzfahrzeug nach einem der Ansprüche 1 bis 6,
**dadurch gekennzeichnet, dass**
die Stützwerkstruktur (11) in der Gebrauchsstellung gegenüber der Nichtgebrauchsstellung nach unten ausgefahren und zum Abstützen des Nutzfahrzeugs (1) auf dem Untergrund vorgesehen ist.

8. Nutzfahrzeug nach Anspruch 7,
**dadurch gekennzeichnet, dass**
die Stützwerkstruktur (11) zwei gegenüberliegenden Längsseiten des Nutzfahrzeugs (1) zugeordnete Stützwinden (12) aufweist, und dass Stützwinden (12), vorzugsweise mit Füßen (13) zum Abstützen des Nutzfahrzeugs (1), zum Verstellen der Stützwerkstruktur (11) in die Gebrauchsstellung nach unten ausfahrbar und zum Verstellen in die Nichtgebrauchsstellung nach oben einfahrbar sind.

9. Nutzfahrzeug nach Anspruch 8,
**dadurch gekennzeichnet, dass**
die wenigstens eine Verstrebung (32-35), vorzugsweise Querverstrebung, mit den gegenüberliegenden Stützwinden (12) verbunden ist und dass, vorzugsweise, die wenigstens eine Verstrebung (32-35), vorzugsweise Querverstrebung, an den gegenüberliegenden Stützwinden (12) aufgehängt sind.

10. Nutzfahrzeug nach einem der Ansprüche 1 bis 9,
**dadurch gekennzeichnet, dass**
die sich wenigstens abschnittsweise nach unten erstreckenden Bauelemente (14) gegenüber den jeweils zugeordneten Längsseiten des Nutzfahrzeugs (1) nach innen versetzt angeordnet sind.

11. Nutzfahrzeug nach einem der Ansprüche 1 bis 10,
**dadurch gekennzeichnet, dass**
die sich wenigstens abschnittsweise nach unten erstreckenden Bauelemente (14) eine größere Erstreckung parallel und/oder senkrecht zur Längserstreckung des Nutzfahrzeugs (1) aufweisen als der wenigstens eine Batteriekasten (17) und dass, vorzugsweise eine Projektion des wenigstens einen Batteriekastens (17) senkrecht auf eine Ebene längs zum Nutzfahrzeug (1) und senkrecht zur Bodenstruktur (10) wenigstens im Wesentlichen in einer Projektion der sich wenigstens abschnittsweise nach unten erstreckenden Bauelemente (14) senkrecht auf dieselbe Ebene aufgenommen ist.

12. Nutzfahrzeug nach einem der Ansprüche 1 bis 11,
**dadurch gekennzeichnet, dass**
der wenigstens eine Batteriekasten (17) einen, insbesondere lösbaren und/oder schwenkbaren, Deckel (40) aufweist und/oder dass der wenigstens eine Batteriekasten (17) aus Kunststoff gebildet ist.

13. Nutzfahrzeug nach einem der Ansprüche 1 bis 12,
**dadurch gekennzeichnet, dass**
die sich wenigstens abschnittsweise nach unten erstreckenden Bauelemente (14) mit, insbesondere quer zum Nutzfahrzeug (1) verlaufenden, Trägerbalken (19), vorzugsweise mit, insbesondere metallenen, Verstärkungen (23) der Trägerbalken (19), verbunden, insbesondere verschraubt, sind.

14. Nutzfahrzeug nach einem der Ansprüche 1 bis 13,
**dadurch gekennzeichnet, dass**
eine Transportkältemaschine (15) zur Kühlung eines Laderaums (8) eines Aufbaus (2), vorzugsweise Kofferaufbaus, vorgesehen ist und dass die wenigstens eine Batterie (16) des wenigstens einen Batteriekastens (17) zum elektrischen Antrieb der Transportkältemaschine (15) mit der Transportkältemaschine (15) elektrisch verbunden ist.

## Claims

1. Commercial vehicle (1), in particular truck, trailer or semi-trailer, with a floor structure (10) supporting a loading floor (9), wherein components (14) assigned to two opposing longitudinal sides of the commercial vehicle (1) and each extending downwards at least in sections are fixedly suspended on the floor structure (10), wherein at least one battery box (17) for receiving at least one electric battery (16) is provided between the components (14) extending downwards at least in sections, **characterised in that** the components (14) extending downwards at least in sections are designed as components of a support structure (11) that can be adjusted from a position of non-use to a position of use for supporting the commercial vehicle (1) on the ground.

2. Commercial vehicle according to claim 1, **characterised in that** the battery box (17) is fixedly connected to the components (14) extending downwards at least in sections and **in that**, preferably, the battery box (17) is suspended on the components (14) extending downwards at least in sections.

3. Commercial vehicle according to claim 1 or 2, **characterised in that** the components (14) extending downwards at least in sections are formed by profiles, in particular made of sheet metal, and/or **in that** the components (14) extending downwards at least in sections are connected to one another via at least one strut (32-35), in particular crossed struts (34, 35).

4. Commercial vehicle according to claim 3, **characterised in that** the at least one battery box (17) is connected to the at least one strut (32-35) and **in that**, preferably, the at least one battery box (17) is suspended on the at least one strut (32-35) and/or is supported on the at least one strut (32-35).

5. Commercial vehicle according to any one of claims 1 to 4, **characterised in that** the at least one battery box (17) is detachably connected to the floor structure (10), preferably to the components (14) extending downwards at least in sections, in particular to the at least one strut (32-35).

6. Commercial vehicle according to any one of claims 1 to 5, **characterised in that** the components (14) extending downwards at least in sections are designed as side parts of the support structure (11) and **in that**, preferably, the at least one strut (32-35) is a transverse strut and/or a strut of the support structure (11).

7. Commercial vehicle according to any one of claims 1 to 6, **characterised in that** the support structure (11) is extended downwards in the position of use compared to the position of non-use and is provided for supporting the commercial vehicle (1) on the ground.

8. Commercial vehicle according to claim 7, **characterised in that** the support structure (11) has two support winches (12) assigned to opposing longitudinal sides of the commercial vehicle (1), and **in that** support winches (12), preferably with feet (13) for supporting the commercial vehicle (1), can be extended downwards to adjust the support structure (11) to the position of use and can be retracted upwards to adjust to the position of non-use.

9. Commercial vehicle according to claim 8, **characterised in that** the at least one strut (32-35), preferably transverse strut, is connected to the opposing support winches (12) and **in that**, preferably, the at least one strut (32-35), preferably transverse strut, are suspended on the opposing support winches (12).

10. Commercial vehicle according to any one of claims 1 to 9, **characterised in that** the components (14) extending downwards at least in sections are arranged offset inwards with respect to the respectively assigned longitudinal sides of the commercial vehicle (1).

11. Commercial vehicle according to any one of claims 1 to 10, **characterised in that** the components (14) extending downwards at least in sections have a greater extension parallel and/or perpendicular to the longitudinal extension of the commercial vehicle (1) than the at least one battery box (17) and **in that**, preferably, a projection of the at least one battery box (17) perpendicular on a plane longitudinal to the commercial vehicle (1) and perpendicular to the floor structure (10) is received at least substantially in a projection of the components (14) extending downwards at least in sections perpendicularly on the same plane.

12. Commercial vehicle according to any one of claims 1 to 11, **characterised in that** the at least one battery box (17) has a cover (40), in particular a detachable and/or pivotable cover, and/or **in that** the at least one battery box (17) is formed from plastic.

13. Commercial vehicle according to any one of claims 1 to 12, **characterised in that** the components (14) extending downwards at least in sections are connected, in particular screwed together, to support beams (19), which run in particular transversely to the commercial vehicle (1), preferably to, in particular metal reinforcements (23) of the support beams (19).

14. Commercial vehicle according to any one of claims 1 to 13, **characterised in that** a transport cooling machine (15) is provided for cooling a loading space (8) of a body (2), preferably of a box body, and **in that** the at least one battery (16) of the at least one battery box (17) is electrically connected to the transport cooling machine (15) for electrically driving the transport cooling machine (15).

## Revendications

1. Véhicule utilitaire (1), notamment un poids lourd, une remorque ou une semi-remorques, avec une structure de plancher (10) portant un plancher de chargement (9), des éléments de construction (14) associés aux deux côtés longitudinaux opposés du véhicule utilitaire (1) et s'étendant respectivement au moins partiellement vers le bas étant suspendus fermement à la structure de plancher (10), au moins un compartiment à piles (17), destiné à loger au moins une pile électrique (16), étant prévu entre les éléments de construction (14) s'étendant au moins partiellement vers le bas, **caractérisé en ce que** les éléments de construction (14) s'étendant au moins partiellement vers le bas sont conçus sous forme d'éléments de construction d'une structure d'un ouvrage d'appui (11) pouvant être déplacée d'une position de non-utilisation à une position d'utilisation pour soutenir le véhicule utilitaire (1) sur le sol.

2. Véhicule utilitaire selon la revendication 1, **caractérisé en ce que** le compartiment à piles (17) est relié fermement aux éléments de construction (14) s'étendant au moins partiellement vers le bas et **en ce que**, de préférence, le compartiment à piles (17) est suspendu aux éléments de construction (14) s'étendant au moins partiellement vers le bas.

3. Véhicule utilitaire selon la revendication 1 ou 2, **caractérisé en ce que** les éléments de construction (14) qui s'étendent au moins partiellement vers le bas sont formés par des profilés, notamment en tôle, et/ou **en ce que** les éléments de construction (14) qui s'étendent au moins partiellement vers le bas sont reliés entre eux par au moins une entretoise (32-35), notamment des entretoises croisées (34, 35).

4. Véhicule utilitaire selon la revendication 3, **caractérisé en ce que** ledit au moins un compartiment à piles (17) est relié à ladite au moins une entretoise (32-35) et **en ce que**, de préférence, ledit au moins un compartiment à piles (17) est suspendu à ladite au moins une entretoise (32,-35) et/ou est en appui contre ladite au moins une entretoise (32-35).

5. Véhicule utilitaire selon l'une des revendications 1 à 4, **caractérisé en ce que** ledit au moins un compartiment à piles (17) est relié, de manière amovible, à la structure de plancher (10), de préférence avec les éléments de construction (14) s'étendant au moins partiellement vers le bas, notamment avec ladite au moins une entretoise (32-35).

6. Véhicule utilitaire selon l'une des revendications 1 à 5, **caractérisé en ce que** les éléments de construction (14) s'étendant au moins partiellement vers le bas sont conçus en tant que parties latérales de la structure d'un ouvrage d'appui (11) et **en ce que**, de préférence, ladite au moins une entretoise (32-35) est une entretoise transversale et/ou une entretoise de la structure d'un ouvrage d'appui (11).

7. Véhicule utilitaire selon l'une des revendications 1 à 6, **caractérisé en ce que** l'on prévoit la structure d'un ouvrage d'appui (11), en position d'utilisation par rapport à la position de non-utilisation, extraite vers le bas et pour soutenir le véhicule utilitaire (1) sur le sol.

8. Véhicule utilitaire selon la revendication 7, **caractérisé en ce que** la structure d'un ouvrage d'appui (11) présente deux béquilles (12) associées aux côtés longitudinaux opposés du véhicule utilitaire (1) et **en ce que** les béquilles (12), de préférence avec des pieds (13) pour soutenir le véhicule utilitaire (1), peuvent être extraites vers le bas pour déplacer la structure d'un ouvrage d'appui (11) en position d'utilisation et être rentrés vers le haut pour déplacer celle-ci en position de non-utilisation.

9. Véhicule utilitaire selon la revendication 8, **caractérisé en ce que** ladite au moins une entretoise (32-35), de préférence une entretoise transversale, est reliée aux béquilles opposées (12) et **en ce que**, de préférence, ladite au moins une entretoise (32-35), de préférence une entretoise transversale, est suspendue aux béquilles opposées (12).

10. Véhicule utilitaire selon l'une des revendications 1 à 9, **caractérisé en ce que** les éléments de construction (14) s'étendant au moins partiellement vers le bas sont agencés décalés vers l'intérieur par rapport aux côtés longitudinaux associés correspondants du véhicule utilitaire (1).

11. Véhicule utilitaire selon l'une des revendications 1 à 10, **caractérisé en ce que** les éléments de construction (14) s'étendant au moins partiellement vers le bas présentent une extension plus importante parallèlement et/ou verticalement par rapport à l'extension longitudinale du véhicule utilitaire (1) que ledit au moins un compartiment à piles (17) et **en ce que**, de préférence, une projection dudit au moins un compartiment à piles (17), perpendiculairement sur un plan le long du véhicule utilitaire (1) et perpendiculairement par rapport à la structure du plancher (10), est au moins sensiblement incluse dans une projection des éléments de construction (14) s'étendant au moins partiellement vers le bas perpendiculairement sur le même plan.

12. Véhicule utilitaire selon l'une des revendications 1 à 11, **caractérisé en ce que** ledit au moins un compartiment à piles (17) présente un couvercle (40), de préférence amovible et/ou pivotant, et/ou **en ce que** ledit au moins un compartiment à piles (17) est conçu en plastique.

13. Véhicule utilitaire selon l'une des revendications 1 à 12, **caractérisé en ce que** les éléments de construction (14) s'étendant au moins partiellement vers le bas sont reliés, notamment vissés, à des barres porteuses (19), de préférence avec des renforts (23), notamment métalliques, des barres porteuses (19), ces barres porteuses (19) s'étendant de préférence transversalement par rapport au véhicule utilitaire (1).

14. Véhicule utilitaire selon l'une des revendications 1 à 13, **caractérisé en ce que** l'on prévoit une machine frigorifique de transport (15) pour le refroidissement d'un compartiment de chargement (8) d'une structure (2), de préférence une structure de coffre, et **en ce que** ladite au moins une pile (16) dudit au moins un compartiment à piles (17) est reliée électriquement à la machine frigorifique de transport (15) pour l'entraînement électrique de la machine frigorifique de transport (15).
